# EUROPÄISCHE PATENTSCHRIFT

(11) **EP 3 321 084 B1**
(45) Veröffentlichungstag und Bekanntmachung des Hinweises auf die Patenterteilung: **02.01.2019**
(21) Anmeldenummer: 16197968.7
(22) Anmeldetag: 09.11.2016
(51) Int. Cl.: B32B 27/36, B32B 27/08, B32B 5/02, B32B 25/14, B29C 47/00, C08L 67/04, C08L 53/02

(54) **ELASTISCHES MEHRSCHICHTMATERIAL**
ELASTIC LAMINATE MATERIAL
MATÉRIAU MULTI-COUCHES ÉLASTIQUE

(43) Veröffentlichungstag der Anmeldung: 16.05.2018
(73) Patentinhaber: Mondi Gronau GmbH, 48599 Gronau (DE)
(72) Erfinder: Hannes, Clasen, 48143 Münster (DE)
(74) Vertreter: Lorenz, Bernd Ingo Thaddeus

(56) Entgegenhaltungen:
- EP-A1- 1 598 181
- EP-A1- 2 886 587

## Beschreibung

Die Erfindung betrifft ein elastisches Mehrschichtmaterial mit einer eine Dicke zwischen 20 µm und 80 µm aufweisenden elastischen Folienschicht und zumindest einer ersten, mit der elastischen Folienschicht coextrudierten und eine Dicke zwischen 1,5 µm und 12 µm aufweisenden nicht-elastischen Deckschicht.

Das elastische Mehrschichtmaterial umfasst zumindest eine mehrschichtig coextrudierte Folie, auf der zusätzlich an zumindest einer Seite eine Deckschicht aus Nonwoven aufgebracht sein kann. Das elastische Mehrschichtmaterial wird besonders bevorzugt als elastisches Verschlussband von Wegwerf-Artikeln wie Einweg-Windeln eingesetzt, wobei einerseits zum Schutz des Trägers gute elastische Eigenschaften notwendig sind und andererseits geringe Kosten ermöglicht werden sollen.

Entsprechend weist die elastische Folienschicht lediglich eine Dicke zwischen 20 µm und 80 µm auf, wobei die elastische Folienschicht mit zumindest einer ersten dünnen Deckschicht aus einem nicht-elastischen Material coextrudiert ist.

Bei elastischen Materialien wie beispielsweise Styrol-Block-Copolymer, welches bevorzugt im Rahmen der Erfindung für die Bildung der elastischen Folienschicht eingesetzt wird, besteht das Problem einer erheblichen Klebrigkeit, so dass eine nur von der elastischen Folienschicht gebildete Monofolie bei einem Aufrollen vor einer Weiterverarbeitung leicht verblocken kann, so dass dann eine solche Monofolie nicht mehr zerstörungsfrei oder nur mit einem großen Aufwand von der Rolle abgezogen werden kann. Darüber hinaus besteht bei einer elastischen Monofolie das Problem, dass diese sich aufgrund der bei einer Verarbeitung notwendigen Zugkräfte nur schwer kontrollierbar dehnt.

Um diese Nachteile zu vermeiden, ist aus der EP 0 521 833 B1 ein elastisches Mehrschichtmaterial in Form einer Folie bekannt, wobei eine elastische Folienschicht mit zumindest einer nicht-elastischen und vergleichsweise dünnen Deckschicht kombiniert ist. Durch die nicht-elastische Deckschicht ist das elastische Mehrschichtmaterial zunächst stabilisiert, wobei auch Zugkräfte bei einer Verarbeitung ohne eine wesentliche Dehnung zunächst aufgenommen werden können. Darüber hinaus kann die mehrschichtige Folie ohne weiteres auf- und abgerollt werden, wobei dann die Deckschicht als eine Art Abstandshalter ein Verblocken der elastischen Folienschicht mit sich selbst sicher vermeiden kann.

Vor oder bei einer erstmaligen Benutzung, beispielsweise als Windelverschluss, erfolgt eine Dehnung, wodurch das elastische Mehrschichtmaterial aktiviert wird. Während bei einer solchen Dehnung die zumindest eine Deckschicht im Wesentlichen plastisch verformt wird oder sogar aufreißt, bewirkt die elastische Folienschicht nach einem Wegfall der Zugkräfte eine elastische Rückstellung. Eine Folie wird im Rahmen der Erfindung als elastisch bezeichnet, wenn nach einer Dehnung von mindestens 50 % ausgehend von einer Ausgangslänge eine Rückstellung um zumindest 25 % erfolgt. Bei einem geringeren Rückstellungsvermögen handelt es sich im Sinne der Erfindung um ein nicht-elastisches Material. Üblicherweise weist das Material der nicht-elastischen Deckschicht bei einer Ausgestaltung als Monofolie keine wesentlichen rückstellenden Eigenschaften auf.

Bei den bekannten elastischen Mehrschichtmaterialien mit einer elastischen Folienschicht und zumindest einer nicht-elastischen Deckschicht wird die Deckschicht üblicherweise möglichst dünn ausgeführt, damit eine Aktivierung bzw. eine erstmalige Dehnung gegen den Widerstand der nicht-elastischen Deckschicht leicht erfolgen kann und danach die nicht-elastische Deckschicht die von der elastischen Folienschicht bereitgestellte Elastizität nicht wesentlich einschränkt.

Als nicht-elastisches Material für die Deckschicht ist insbesondere Polyolefin wie beispielsweise Polyethylen und Polypropylen geeignet, wobei diese Polyolefine vergleichsweise zäh und ohne eine elastische Rückstellung gut dehnbar sind, so dass sich nach einer Dehnung und einer elastischen Rückstellung bei Polyolefinen häufig eine mikrotexturierte aber weiterhin geschlossene Oberfläche ergibt.

Als weiteres Material für die Deckschichten kommt Polystyrol oder auch ein Blend von Polystyrol und Polyolefin in Betracht. Bei einer solchen auf Basis von Polystyrol gebildeten Deckschicht ergibt sich ein vergleichsweise steifes Verhalten, wobei die Deckschicht dazu tendiert, bei einer Aktivierung bereichsweise zu zerreißen.

Bei einer Styrol-haltigen Deckschicht ergibt sich in der Praxis jedoch das Problem, dass in dem Polymer enthaltene flüchtige Bestandteile wie Styrol-Monomere und andere niedermolekulare Bestandteile einen unangenehmen Geruch erzeugen können. Selbst wenn die Menge solcher flüchtigen organischen Verbindungen aus gesundheitlicher Sicht unkritisch ist, wird der durch flüchtige Polystyrol-Bestandteile hervorgerufene Geruch als unangenehm und chemisch wahrgenommen. Eine besonders starke Geruchsentwicklung ergibt sich beispielsweise, wenn eine Verpackung mit einer Vielzahl von Einweg-Windeln nach einer längeren Lagerdauer aufgerissen wird.

Um die Geruchsbelastung zu reduzieren, ist gemäß der EP 2 789 646 A1 vorgesehen, ein Styrol-haltiges Polymer bei der Extrusion in einem separaten Schritt zu entgasen. Gemäß der EP 2 335 663 B1 wird die Zugabe von Zeolithen in einem genau definierten Größenbereich vorgeschlagen, um Styrol-Monomere und andere niedermolekulare Bestandteile aufzunehmen.

Aus der EP 2 886 587 A1 ist eine elastische Folie mit zumindest einer elastischen Folienschicht bekannt, welche aus einer Polymermischung gebildet ist und neben einem Styrol-Block-Copolymer zumindest eine zweite Polymerkomponente aus Polylactid aufweist.

Die EP 1 598 181 A1 beschreibt einen mehrschichtigen Film mit einer flexiblen Zwischenschicht aus einem biologisch abbaubaren Polyesterharz, die zwischen zwei harten Polylactid-Schichten angeordnet ist.

Trotz dieser Ansätze besteht das Bedürfnis, die Geruchsbelastung mit einfachen Mitteln weiter zu reduzieren.

Vor diesem Hintergrund liegt der vorliegenden Erfindung die Aufgabe zugrunde, ein gattungsgemäßes elastisches Mehrschichtmaterial anzugeben, bei dem auf einfache Weise bei guten mechanischen Eigenschaften die Geruchsbelastung reduziert ist.

Gegenstand der Erfindung und Lösung der Aufgabe ist ein elastisches Mehrschichtmaterial gemäß Patentanspruch 1. Demnach ist ausgehend von einem gattungsgemäßen elastischen Mehrschichtmaterial erfindungsgemäß vorgesehen, dass die erste Deckschicht zumindest 20 Gew.-%, vorzugsweise zumindest 25 Gew.-% Polylactid enthält. Bevorzugte Ausführungsformen der Erfindung ergeben sich aus den Unteransprüchen.

Überraschenderweise ist das aus Milchsäuremolekülen aufgebaute technische Biopolymer Polylactid für die Bildung von nicht-elastischen Deckschichten geeignet, wobei sich ähnliche mechanische Eigenschaften wie bei Polystyrol ergeben. Durch den Anteil von zumindest 20 Gew.-% von Polylactid ist die erste Deckschicht relativ steif, so dass diese aufgrund ihrer geringen Dicke zwischen 1,5 µm und 12 µm leicht aktiviert werden kann, wobei bei einer Dehnung die erste Deckschicht vorzugsweise teilweise zerstört wird. Besonders bevorzugt ist die erste nicht-elastische Deckschicht frei von Polystyrol und jeglichen Polystryol-Copolymeren, so dass zumindest die erste Deckschicht keine Quelle für Styrol-Monomere und andere niedermolekulare Styrol-Bestandteile ist.

Zusätzlich wird im Rahmen der Erfindung auch erreicht, dass durch den Einsatz von Polylactid als technischem Biopolymer der Verbrauch an fossilen Kohlenstoffverbindungen reduziert wird, was zu einer verbesserten CO₂-Bilanz führen kann.

Die elastischen Eigenschaften des elastischen Mehrschichtmaterials werden von der elastischen Folienschicht bereitgestellt. Demnach weist das elastische Mehrschichtmaterial in zumindest einer Dehnungsrichtung ausgehend von einer Ausgangslänge nach einer Dehnung von mindestens 50 % eine Rückstellung um zumindest 25 % auf. Vorzugsweise beträgt die Rückstellung nach einer Dehnung von 100 % zumindest 75 %.

Gerade bei einer Ausgestaltung der elastischen Folienschicht auf der Basis von Styrol-Block-Copolymer sind aber auch ohne weiteres Dehnwerte von 200 %, 400 % oder mehr erreichbar.

Zu den für die elastische Folienschicht vorzugsweise eingesetzten Styrol-BlockCopolymeren zählen insbesondere Styrol-Butadien-Styrol-Block-Copolymer (SBS), Styrol-Isopren-Styrol-Block-Copolymer (SIS) und Styrol-Ethen-Butadien-Styrol-Block-Copolymer (SEBS). Das Styrol-Block-Copolymer ist vorzugsweise Hauptbestandteil der elastischen Folienschicht und kann beispielsweise mit einem Gewichtsanteil zwischen 60 Gew.-% und 99 Gew.-% vorliegen, wobei auch Additive einschließlich Farbstoffe in der elastischen Folienschicht vorgesehen sein können.

Gemäß einer besonders bevorzugten Ausgestaltung der Erfindung ist die elastische Folienschicht aus Styrol-Block-Copolymer mit einem Rest von Additiven mit einem Anteil von weniger als 12 Gew.-%, insbesondere weniger als 7 Gew.-% gebildet.

Die erste Deckschicht besteht gemäß einer bevorzugten Ausgestaltung der Erfindung aus einem Blend mit Polylactid (PLA) und zumindest einem weiteren Polymer, insbesondere Polyolefin. Besonders bevorzugt ist eine Ausgestaltung mit 40 Gew.-% bis 60 Gew.-% Polylactid und mit 30 Gew.-% bis 50 Gew.-% Polyolefin, wobei der Rest von Füllstoffen und Additiven gebildet sein kann. Als Füllstoff für die nicht-elastische Deckschicht kommt beispielsweise Talkum in Betracht, welche beispielsweise mit einem Gewichtsanteil zwischen 5 Gew.-% und 20 Gew.-% enthalten ist.

Gemäß einer bevorzugten Weiterbildung der Erfindung weist die elastische Folienschicht eine Dicke zwischen 30 µm und 55 µm auf, während die nicht-elastische Deckschicht eine Dicke zwischen 2 µm und 5 µm aufweist. Insbesondere kann im Rahmen der Erfindung ein Dickenverhältnis der elastischen Folienschicht zu der ersten nicht-elastischen Deckschicht von größer als 10:1 vorgesehen sein. Dabei ist zu berücksichtigen, dass die nicht-elastische Deckschicht auch sehr dünn ausgeführt werden kann, um die ihr zugeordnete Funktion, nämlich eine Stabilisierung und ein Schutz gegen ein Verblocken der elastischen Folienschicht bereitzustellen.

Erfindungsgemäß weist das elastische Mehrschichtmaterial zumindest die elastische Folienschicht und die erste nicht-elastische Deckschicht auf, welche gemeinsam coextrudiert sind.

Gemäß einer Weiterbildung der Erfindung ist die elastische Folienschicht als Kernschicht zwischen der ersten nicht-elastischen Deckschicht und einer zweiten nicht-elastischen Deckschicht angeordnet, welche die zuvor im Zusammenhang mit der ersten Deckschicht beschriebenen Merkmale aufweist.

Insbesondere kann im Rahmen der Erfindung ein vorzugsweise coextrudierter symmetrischer Schichtaufbau vorgesehen sein, bei dem die erste Deckschicht und die zweite Deckschicht genau gleich ausgeführt sind.

Durch den Einsatz von Polylactid (PLA) kann der für Styrol-Monomere bzw. niedermolekulare Styrol-Bestandteile typische Geruch zumindest reduziert werden, auch wenn die elastische Folienschicht als elastisches Polymer Styrol-Block-Copolymer aufweist. Vor diesem Hintergrund ist es besonders vorteilhaft, wenn die elastische Folienschicht als Kernschicht zwischen zwei nicht-elastischen Deckschichten angeordnet ist, die vorzugsweise vollständig frei von Polystyrol sind. Im Rahmen einer solchen Ausgestaltung werden dann auch flüchtige Bestandteile der Kernschicht zumindest in einem gewissen Maße zwischen den beiden Deckschichten zurückgehalten.

Im Rahmen der Erfindung ist zu berücksichtigen, dass auch Polylactid nicht frei von molekularen Bestandteilen ist, welche als Aromastoff durch den Geruchssinn eines Benutzers wahrnehmbar sind. So enthält Polylactid als geruchsaktive Substanz Sotolon, eine heterozyklische Verbindung mit der Struktur eines intramolekularen Carbonsäureesters.

Abhängig von der Konzentration wird Sotolon von einem Benutzer mit dem Geruch nach Ahornsirup, Karamell, verbranntem Zucker oder auch bei höheren Konzentrationen mit Curry, Liebstöckel und Bockshornklee verbunden. Abgesehen von dem Vorteil, dass diese Gerüche von einem Benutzer als weniger chemisch und in geringen Konzentrationen sogar als angenehm empfunden werden, kann auch bei dem Einsatz von Polylactid eine gewisse Geruchsbeeinträchtigung nicht vollständig ausgeschlossen werden.

Orientierende Versuche haben ergeben, dass die Abgabe von Sotolon aus Polylactid wesentlich von den weiteren Bestandteilen der jeweiligen Polymerzusammensetzung abhängt. Insbesondere können Weichmacher und andere Verarbeitungshilfsmittel als eine Art Lösungsmittel für Sotolon wirken und so eine Freisetzung fördern.

Vor diesem Hintergrund ist es gerade von Vorteil, Polylactid in der nicht-elastischen Deckschicht bzw. den nicht-elastischen Deckschichten einzusetzen, weil diese ohnehin steif und brüchig sein sollen, während beispielsweise bei einer Zumischung von Polylactid in der elastischen Folienschicht eine erhöhte Konzentration von Sotolon festgestellt werden kann. Vor diesem Hintergrund ist gemäß einer bevorzugten Ausgestaltung der Erfindung auch vorgesehen, dass die elastische Folienschicht völlig frei von Polylactid ist.

Das elastische Mehrschichtmaterial weist zumindest die gemeinsamen coextrudierten Folienschichten auf, wobei die erste nicht-elastische Deckschicht und gegebenenfalls auch die zweite nicht-elastische Deckschicht vorzugsweise mit einem Nonwoven als zusätzliche Außenlage verklebt ist.

Geeignet sind beispielsweise Nonwoven-Materialien mit einem Flächengewicht zwischen 12 g/m² und 50 g/m², wobei die Verklebung in einem Kaschierprozess mit einem geeigneten Klebstoff erfolgt.

Für die Kaschierung des Nonwovens mit der ersten nicht-elastischen Deckschicht und gegebenenfalls der zweiten nicht-elastischen Deckschicht sind im besonderen Maße Hotmelt-Klebstoffe geeignet, welche in einem schmelzflüssigen Zustand verarbeitet werden und dann nach einem Erkalten eine sichere Verbindung des Nonwovens mit der jeweils angrenzenden nicht-elastischen Deckschicht gewährleisten. Auch hinsichtlich des Klebstoffes, also insbesondere des bevorzugten Hotmelt-Klebstoffes, kann es je nach Materialzusammensetzung zu einer erhöhten Freisetzung von Sotolon kommen. Vor diesem Hintergrund sind gemäß einer bevorzugten Weiterbildung der Erfindung Hotmelt-Klebstoffe auf der Basis von Styrol-Block-Copolymer oder elastischem Polyolefin besonders bevorzugt.

Die gemeinsamen coextrudierten Folienschichten können vor der Verbindung mit dem Nonwoven aktiviert, das heißt erstmalig gedehnt werden, um die Deckschicht bzw. die Deckschichten plastisch zu dehnen und vorzugsweise zumindest teilweise zu zerstören, damit das elastische Mehrschichtmaterial bei weiteren Dehnungen leicht gestreckt werden kann. Im Rahmen einer solchen Ausgestaltung ist dann der Klebstoff auf die durch die Aktivierung zumindest teilweise zerstörte erste nicht-elastische Deckschicht aufgebracht.

Alternativ können die gemeinsamen coextrudierten Folienschichten auch zunächst mit zumindest einer Schicht aus Nonwoven kaschiert werden, bevor dann das so gebildete gesamte elastische Mehrschichtmaterial aktiviert wird. Ein solches Vorgehen ist insbesondere dann zweckmäßig, wenn das Nonwoven selbst zunächst eine erhebliche Zugfestigkeit aufweist und für eine leichte Dehnbarkeit ähnlich wie die zumindest erste nicht-elastische Deckschicht aktiviert werden muss.

Die gemeinsamen coextrudierten Folienschichten können im Rahmen der Erfindung besonders bevorzugt durch Blasfolienextrusion gebildet sein.

Die Aktivierung der gemeinsamen coextrudierten Folienschichten bzw. des elastischen Mehrschichtmaterials erfolgt vorzugsweise quer zu der Produktionsrichtung der gemeinsamen coextrudierten Folienschichten (CD-cross direction).

### Vergleichsbeispiel:

Als Vergleichsbeispiel wurde eine symmetrische dreischichtige Folie mit 3,5 µm dicken nicht-elastischen Deckschichten sowie einer 43 µm dicken elastischen Folienschicht als Kernschicht durch Blasfolienextrusion coextrudiert. Die Deckschichten enthalten jeweils einen Blend aus 50 Gew.-% Polystyrol, 40 Gew.-% Polyolefin, 10 Gew.-% Talkum und übliche Additive. Die Kernschicht ist auf der Basis von Styrol-Block-Copolymer wie beispielsweise SIS und SEBS gebildet und enthält Additive und Farbmittel.

Bei einer subjektiven Prüfung der so produzierten Folie ist durch Testpersonen ein deutlicher für Styrol-Polymere üblicher Geruch als störend feststellbar.

### Erfindungsgemäßes Beispiel:

Bei einem erfindungsgemäßen elastischen Mehrschichtmaterial erfolgt ebenfalls die Coextrusion einer symmetrischen, dreischichtigen Folie mit einer gleichen Dickenverteilung und einer übereinstimmenden Ausgestaltung der Kernschicht auf der Basis von Styrol-Block-Copolymer.

Die Außenschichten weisen jedoch anstelle von Polystyrol bei ansonsten gleicher Zusammenstellung des Blends Polylactid auf.

Bei einer subjektiven Beurteilung durch Testpersonen ist keine wesentliche Geruchsbeeinträchtigung festzustellen. Auch eine Messung der flüchtigen organischen Verbindungen zeigt eine deutliche Reduzierung gegenüber dem Vergleichsbeispiel.

## Patentansprüche

1. Elastisches Mehrschichtmaterial mit einer eine Dicke zwischen 20 µm und 80 µm aufweisenden elastischen Folienschicht und zumindest einer ersten, mit der elastischen Folienschicht coextrudierten und eine Dicke zwischen 1,5 µm und 12 µm aufweisenden nicht-elastischen Deckschicht, **dadurch gekennzeichnet, dass** die Deckschicht zumindest 20 Gew.-% Polylactid enthält, wobei das elastische Mehrschichtmaterial in zumindest einer Dehnungsrichtung ausgehend von einer Ausgangslänge nach einer Dehnung von mindestens 50 % eine Rückstellung um zumindest 25 % aufweist.

2. Elastisches Mehrschichtmaterial nach Anspruch 1, **dadurch gekennzeichnet, dass** die elastische Folienschicht auf der Basis von Styrol-Block-Copolymer gebildet ist.

3. Elastisches Mehrschichtmaterial nach Anspruch 1 oder 2, **dadurch gekennzeichnet, dass** die elastische Folienschicht als Kernschicht zwischen der ersten Deckschicht und einer zweiten Deckschicht angeordnet ist.

4. Elastisches Mehrschichtmaterial nach Anspruch 3, **dadurch gekennzeichnet, dass** die erste Deckschicht, die Kernschicht und die zweite Deckschicht mit einem symmetrischen Schichtaufbau coextrudiert sind.

5. Elastisches Mehrschichtmaterial nach einem der Ansprüche 1 bis 4, **dadurch gekennzeichnet, dass** die erste Deckschicht aus einem Blend mit 40 Gew.-% bis 60 Gew.-% Polylactid und mit 30 Gew.-% bis 50 Gew.-% Polyolefin gebildet ist.

6. Elastisches Mehrschichtmaterial nach einem der Ansprüche 1 bis 5, **dadurch gekennzeichnet, dass** die elastische Folienschicht eine Dicke zwischen 30 µm und 55 µm aufweist und dass die erste nicht-elastische Deckschicht eine Dicke zwischen 2 µm und 5 µm aufweist.

7. Elastisches Mehrschichtmaterial nach einem der Ansprüche 1 bis 6, **dadurch gekennzeichnet, dass** die erste nicht-elastische Deckschicht mit einem Nonwoven verklebt ist.

8. Elastisches Mehrschichtmaterial nach Anspruch 7, **dadurch gekennzeichnet, dass** das Nonwoven ein Flächengewicht zwischen 12 g/m² und 50 g/m² aufweist.

9. Elastisches Mehrschichtmaterial nach Anspruch 7 oder 8, **dadurch gekennzeichnet, dass** die gemeinsam coextrudierten Folienschichten aktiviert sind, wobei ein Klebstoff auf die durch die Aktivierung zumindest teilweise zerstörte erste nicht-elastische Deckschicht aufgebracht ist.

10. Elastisches Mehrschichtmaterial nach einem der Ansprüche 7 bis 9, **dadurch gekennzeichnet, dass** das Nonwoven und die erste nicht-elastische Deckschicht mit einem Hotmelt-Klebstoff miteinander verklebt sind.

11. Elastisches Mehrschichtmaterial nach Anspruch 10, **dadurch gekennzeichnet, dass** der Hotmelt-Klebstoff auf der Basis von Styrol-Block-Copolymer oder vom elastischen Polyolefin gebildet ist.

12. Elastisches Mehrschichtmaterial nach einem der Ansprüche 1 bis 11, **dadurch gekennzeichnet, dass** die elastische Folienschicht frei von Polylactid ist.

13. Elastisches Mehrschichtmaterial nach einem der Ansprüche 1 bis 12, **dadurch gekennzeichnet, dass** Polylactid einen Schmelzindex (MFR) von weniger als 13 g/10 min (210 °C, 2.16 kg) aufweist.

14. Elastisches Mehrschichtmaterial nach einem der Ansprüche 1 bis 13, **dadurch gekennzeichnet, dass** die gemeinsam coextrudierten Folienschichten durch Blasfolienextrusion gebildet sind.

## Claims

1. Elastic multilayer material comprising an elastic film layer having a thickness between 20 µm and 80 µm and at least one first non-elastic cover layer co-extruded with the elastic film layer and having a thickness between 1.5 µm and 12 µm, **characterized in that** the cover layer contains at least 20 wt.% of polylactide, wherein starting from an initial length after an elongation of at least 50% the elastic multilayer material exhibits a recovery by at least 25% in at least one direction of elongation.

2. The elastic multilayer material according to claim 1, **characterized in that** the elastic film layer is formed on the basis of styrene block copolymers.

3. The elastic multilayer material according to claim 1 or 2, **characterized in that** the elastic film layer is arranged as a core layer between the first cover layer and a second cover layer.

4. The elastic multilayer material according to claim 3, **characterized in that** the first cover layer, the core layer and the second cover layer are co-extruded with a symmetrical layer structure.

5. The elastic multilayer material according to one of claims 1 to 4, **characterized in that** the first cover layer is formed from a blend with 40 wt.% to 60 wt.% of polylactide and with 30 wt.% to 50 wt.% of polyolefin.

6. The elastic multilayer material according to one of claims 1 to 5, **characterized in that** the elastic film layer has a thickness between 30 µm and 55 µm and that the first non-elastic cover layer has a thickness between 2 µm and 5 µm.

7. The elastic multilayer material according to one of claims 1 to 6, **characterized in that** the first non-elastic cover layer is adhesively bonded with a nonwoven.

8. The elastic multilayer material according to claim 7, **characterized in that** the nonwoven has a grammage between 12 g/m² and 50 g/m².

9. The elastic multilayer material according to claim 7 or 8, **characterized in that** the jointly co-extruded film layers are activated, wherein an adhesive is applied to the first non-elastic cover layer at least partially destroyed by the activation.

10. The elastic multilayer material according to one of claims 7 to 9, **characterized in that** the nonwoven and the first non-elastic cover layer are adhesively bonded to one another by means of a hotmelt adhesive.

11. The elastic multilayer material according to claim 10, **characterized in that** the hotmelt adhesive is formed on the basis of styrene block copolymers or elastic polyolefin.

12. The elastic multilayer material according to one of claims 1 to 11, **characterized in that** the elastic film layer is free from polylactide.

13. The elastic multilayer material according to one of claims 1 to 12, **characterized in that** polylactide has a melt index (MFR) of less than 13 g/10 min (210°C, 2.16 kg).

14. The elastic multilayer material according to one of claims 1 to 13, **characterized in that** the jointly co-extruded film layers are formed by blown film extrusion.

## Revendications

1. Matériau multi-couches élastique comprenant une couche de film élastique présentant une épaisseur entre 20 µm et 80 µm et au moins une première couche de recouvrement non-élastique co-extrudée avec la couche de film élastique et présentant une épaisseur entre 1,5 µm et 12 µm, **caractérisé en ce que** la couche de recouvrement contient au moins 20 % en poids d'acide polylactique, dans lequel le matériau multi-couches élastique présente dans au moins un sens de dilatation, en partant d'une longueur de départ, après une dilatation d'au moins 50 %, une reprise d'au moins 25 %.

2. Matériau multi-couches élastique selon la revendication 1, **caractérisé en ce que** la couche de film élastique est formée à base de copolymère bloc styrène.

3. Matériau multi-couches élastique selon la revendication 1 ou 2, **caractérisé en ce que** la couche de film élastique est disposée en tant que couche de coeur entre la première couche de recouvrement et une deuxième couche de recouvrement.

4. Matériau multi-couches élastique selon la revendication 3, **caractérisé en ce que** la première couche de recouvrement, la couche de coeur et la deuxième couche de recouvrement sont coextrudées avec un montage de couches symétrique.

5. Matériau multi-couches élastique selon l'une des revendications 1 à 4, **caractérisé en ce que** la première couche de recouvrement est composée d'un mélange de 40 % en poids à 60 % en poids d'acide polylactique et de 30 % en poids à 50 % en poids de polyoléfine.

6. Matériau multi-couches élastique selon l'une des revendications 1 à 5, **caractérisé en ce que** la couche de film élastique présente une épaisseur entre 30 µm et 55 µm et que la première couche de recouvrement non-élastique présente une épaisseur entre 2 µm et 5 µm.

7. Matériau multi-couches élastique selon l'une des revendications 1 à 6, **caractérisé en ce que** la première couche de film non-élastique est collée avec un non-tissé.

8. Matériau multi-couches élastique selon la revendication 7, **caractérisé en ce que** le non-tissé présente un poids surfacique entre 12 g/m² et 50 g/m².

9. Matériau multi-couches élastique selon la revendication 7 ou 8, **caractérisé en ce que** les couches de film co-extrudées communes sont activées, dans lequel une colle est appliquée sur la première couche de recouvrement non-élastique au moins en partie détruite par l'activation.

10. Matériau multi-couches élastique selon l'une des revendications 7 à 9, **caractérisé en ce que** le non-tissé et la première couche non-élastique sont collées entre elles avec une colle à fusion à chaud.

11. Matériau multi-couches élastique selon la revendication 10, **caractérisé en ce que** la colle à fusion à chaud est formée à base de copolymère bloc styrène ou de polyoléfine élastique.

12. Matériau multi-couches élastique selon l'une des revendications 1 à 11, **caractérisé en ce que** la couche de film élastique est sans acide polylactique.

13. Matériau multi-couches élastique selon l'une des revendications 1 à 12, **caractérisé en ce que** l'acide polylactique présente un indice de fusion (MFR) inférieur à 13g/10 min (210°C, 2.16kg).

14. Matériau multi-couches élastique selon l'une des revendications 1 à 13, **caractérisé en ce que** les couches de film co-extrudées communes sont fabriquées par extrusion de film par soufflage.
